# EUROPEAN PATENT APPLICATION

(11) **EP 4 502 079 A1**
(43) Date of publication of application: **05.02.2025**
(21) Application number: 23780723.5
(22) Date of filing: 29.03.2023
(51) Int. Cl.: C08L 101/00, C08J 3/20, C08L 67/00, C08L 69/00, C08L 71/12, C08L 81/02, C08L 81/06, C09K 21/02

(54) **RESIN COMPOSITION, RESIN MOLDED BODY, AND METHOD FOR PRODUCING RESIN COMPOSITION**

(30) Priority: 31.03.2022 JP 2022060227
(71) Applicant: Mitsubishi Materials Corporation, Tokyo 100-8117 (JP)
(72) Inventor: WAKAMATSU, Mariko, Amagasaki-shi, Hyogo 660-0856 (JP); ZUSHI, Toshihiro, Amagasaki-shi, Hyogo 660-0856 (JP)
(74) Representative: Hoffmann Eitle
(86) International application number: PCT/JP2023/012874
(87) International publication number: WO 2023/190715

(57) **Abstract**

A resin composition includes a thermoplastic resin; a carbon fiber; and a silane coupling agent, in which a content of the thermoplastic resin is within a range of 59 parts by mass or more and 88 parts by mass or less, a content of the carbon fiber is within a range of 1 part by mass or more and 18 parts by mass or less, and a content of the silane coupling agent is within a range of 0.3 parts by mass or more and 7 parts by mass or less, with respect to a total of 100 parts by mass of the resin composition, and the carbon fiber is an isotropic pitch-based carbon fiber.

## Description

### TECHNICAL FIELD

The present invention relates to a fire-resistant resin composition, a resin molded body formed of the fire-resistant resin composition, and a method for producing a resin composition.

Priority is claimed on Japanese Patent Application No. 2022-060227, filed March 31, 2022, the content of which is incorporated herein by reference.

### BACKGROUND ART

**In** recent years, in order to reduce the weight of various devices, exterior bodies and other components, as configuration members, which have been conventionally formed of metal, are often formed of resin materials. For example, an exterior body of a lithium ion secondary battery (hereinafter, may also be referred to as a "battery") and other exterior components are also often formed of resin materials in order to reduce the weight. Therefore, resin materials having excellent moldability, such as moldability along with an outer shape of an object to be formed, have been demanded.

On the other hand, as the energy density increases (300 Wh/kg or more) with the size reduction, there is a concern that the batteries formed of resin materials may generate heat and have high temperature depending on the usage. Accordingly, the safety in batteries and battery packs has been more important. On the other hand, in a case where the moldability may be deteriorated as the safety (fire-resistance) is improved, ensuring both the safety and the moldability is demanded.

For example, in the lithium ion secondary battery, a thermal runaway may occur in a case where the lithium ion secondary battery is overcharged or overdischarged, or internal short-circuit or external short-circuit is caused by applying an unexpected impact. **In** the lithium ion secondary battery in which the thermal runaway has occurred, gas is generated to increase the internal pressure of the battery. When such a situation occurs, there is a possibility that for example, the exterior may rupture because of an increase in the internal pressure. Therefore, exhaust holes, safety valves, and other components for degasification are provided in these batteries.

However, a high-temperature flame or high-temperature and high-pressure gas blow out through an exhaust hole or a safety valve for degasification provided in the lithium ion secondary battery in which the thermal runaway has occurred, and the maximum temperature thereof may exceed 999°C in some cases. Therefore, there is a concern that this may cause deformation or melting of the resin material. **In** addition, in a vehicle fire or other emergency situations, when a lithium ion secondary battery is exposed to an external flame, a high-temperature and high-pressure flame may blow out from the lithium ion secondary battery because of heat from the outside, thereby secondary damage to occupants or peripheral components may be caused.

As a resin material of which the moldability has been improved as well as deformation or melting caused by the blowout of such a flame or high-temperature gas is controllable, Patent Document 1 discloses, for example, a resin molding material to improve warpage of a molded product by the addition of specific fibers.

In addition, Patent Document 2 discloses a polyphenylene sulfide resin composition containing carbon fibers pretreated with a silane coupling agent.

### [Citation List]

### [Patent Documents]

[Patent Document 1]
   Japanese Unexamined Patent Application, First Publication No. 2000-119405 (A)
[Patent Document 2]
   Japanese Unexamined Patent Application, First Publication No. H06-49362 (A)

### SUMMARY OF INVENTION

### Technical Problem

However, the output of flames generated during thermal runaway has increased remarkably because of the high energy density of batteries in recent years. When lithium ion secondary batteries, which have rapidly spread in recent years, ignite, the temperature of the flame is considered to be about 1000°C. The evaluation of melt deformation caused by the flame is carried out only for a flame having an output of 500 W even in a product safety standard (UL standard) established by the Underwriters Laboratories, and under the condition that the flame temperature exceeds 1000°C, even the resin compositions disclosed in Patent Document 1 and Patent Document 2 may not achieve both the moldability and the melting and fluidization.

On the other hand, since the resin composition in which a halogen-based flame retardant is blended to improve flame retardancy may generate harmful substances such as halogen-containing gas during combustion, there is a demand for a flame-retardant resin composition that does not contain a halogen-based material.

The present invention has been made in view of the above-described circumstances, and an object thereof is to provide a resin composition that enables the control of melting, deformation, and fluidization caused by the blowout of a high-temperature gas or a flame and has good moldability, a resin molded body formed of the resin composition, and a method for producing the resin composition.

### Solution to Problem

The present inventors have found that in a case where a resin composition is composed of materials including a thermoplastic resin, a carbon fiber, and a silane coupling agent, content ratios of the compositions are set within specific ranges, and an isotropic pitch-based carbon fiber is selectively used as the carbon fiber, it is possible to control a melt deformation amount of the resin composition when exposed to a flame of 1000°C or higher and to provide good moldability.

In order to solve the above-described issues, the present invention proposes the following means.

That is, a resin composition of the present invention contains a thermoplastic resin; a carbon fiber; and a silane coupling agent, in which a content of the thermoplastic resin is within a range of 59 parts by mass or more and 88 parts by mass or less, a content of the carbon fiber is within a range of 1 part by mass or more and 18 parts by mass or less, and a content of the silane coupling agent is within a range of 0.3 parts by mass or more and 7 parts by mass or less, with respect to a total of 100 parts by mass of the resin composition, and the carbon fiber is an isotropic pitch-based carbon fiber.

According to the present invention, in a case where the total content of the resin composition is 100 parts by mass, since the resin composition contains the thermoplastic resin, the carbon fiber, and the silane coupling agent such that a content of the thermoplastic resin is within a range of 59 parts by mass or more and 88 parts by mass or less, a content of the carbon fiber is within a range of 1 part by mass or more and 18 parts by mass or less, and a content of the silane coupling agent is within a range of 0.3 parts by mass or more and 7 parts by mass or less, and the isotropic pitch-based carbon fiber is used as the carbon fiber, it is possible to obtain the resin composition that has the improved resistance to melt deformation and is controllable for melt deformation and fluidization even though the resin composition is exposed to flames of about 1000°C, for example.

In addition, in the present invention, the thermoplastic resin may include at least one of polyphenylene sulfide, polyamide, polybutylene terephthalate, a modified polyphenylene ether, or polycarbonate.

In addition, in the present invention, the silane coupling agent may be at least one of an organosilicon compound or a siloxane compound.

In addition, in the present invention, the organosilicon compound may be at least one of an amine-based silane coupling agent or an epoxy-based silane coupling agent.

In addition, in the present invention, the resin composition may further contain a glass fiber, in which a content of the glass fiber is within a range of 3 parts by mass or more and 35 parts by mass or less with respect to 100 parts by mass of the thermoplastic resin.

The resin molded body according to the present invention is formed by molding the resin composition described in each of the above clauses.

In the present invention, the resin molded body may be attached to an outer periphery of one or more lithium ion secondary battery cells having a safety valve or an exhaust hole to cover at least the safety valve or the exhaust hole.

A method for producing the resin composition according to the present invention is the method for producing the resin composition according to each clause and the method for producing the resin composition according to any one of Claims 1 to 4, the method including: a silane coupling agent addition step of adding a total amount of the silane coupling agent dropwise to a part of a thermoplastic resin fractionated within a range of 4 parts by mass or more and 77 parts by mass or less from 100 parts by mass of the thermoplastic resin to obtain a part of the thermoplastic resin to which the silane coupling agent is added; a first mixing step of adding a remainder of the thermoplastic resin within a range of 23 parts by mass or more and 96 parts by mass or less to the part of the thermoplastic resin to which the silane coupling agent is added and mixing the remainder and the part of the thermoplastic resin to which the silane coupling agent is added to obtain an intermediate mixture in which the silane coupling agent and a total amount of the thermoplastic resin are mixed with each other; and a second mixing step of adding a total amount of the carbon fiber to the intermediate mixture and further mixing the carbon fiber and the intermediate mixture to obtain the resin composition.

### ADVANTAGEOUS EFFECTS OF INVENTION

According to the present invention as described above, it is possible to provide the resin composition that enables the control of melting, deformation, and fluidization caused by the blowout of a high-temperature gas or a flame, the resin molded body formed by using the resin composition, and the method for producing the resin composition.

### BRIEF DESCRIPTION OF DRAWINGS

FIG. 1 is a perspective view of a lithium ion secondary battery cell to which a resin molded body according to an embodiment of the present invention is attached.
FIG. 2 is a perspective view showing a resin molded body according to an embodiment of the present invention and a lithium ion secondary battery cell to which the resin molded body is to be attached.
FIG. 3 is a perspective view of a lithium ion secondary battery cell to which the resin molded body of FIG. 2 is attached.
FIG. 4 is a sectional view taken along line A-A of FIG. 3.

### DESCRIPTION OF EMBODIMENTS

Hereinafter, a resin composition according to an embodiment of the present invention and a resin molded body using the resin composition are described in detail with reference to the drawings as appropriate. The drawings used in the following description may be drawn with specific portions enlarged as appropriate to facilitate comprehension of the features of the present invention, and the dimensional ratios and the like between the constituent elements may differ from the actual values. Materials, dimensions, and the like provided in the following description are exemplary examples, and the present invention is not limited thereto, and can be appropriately modified and implemented within the range in which the effects are exhibited.

### (Resin Composition)

The resin composition according to an embodiment of the present invention is formed of a mixture of a thermoplastic resin, a carbon fiber, and a silane coupling agent, and as necessary, may further contain a glass fiber.

The resin composition according to the present embodiment includes a thermoplastic resin, a carbon fiber, and a silane coupling agent, in which a content of the thermoplastic resin is within a range of 59 parts by mass or more and 88 parts by mass or less, a content of the carbon fiber is within a range of 1 part by mass or more and 18 parts by mass or less, and a content of the silane coupling agent is within a range of 0.3 parts by mass or more and 7 parts by mass or less, with respect to a total of 100 parts by mass of the resin composition.

The resin composition may contain the thermoplastic resin within a range of 60 to 82 parts by mass or 61 to 75 parts by mass.

The resin composition may contain the carbon fiber within a range of 2 to 16 parts by mass or 4 to 13 parts by mass.

The resin composition may contain the silane coupling agent within a range of 0.4 to 6 parts by mass or 0.5 to 5 parts by mass.

The resin composition may also further contain a glass fiber, in which a content of the glass fiber is within a range of 3 parts by mass or more and 35 parts by mass or less with respect to 100 parts by mass of the thermoplastic resin.

Examples of the thermoplastic resin used in the resin composition include a mixture of any one kind or two or more kinds of polyphenylene sulfide (PPS), polyamide 6 (PA6), polybutylene terephthalate (PBT), a modified polyphenylene ether (mPPE), polycarbonate (PC), or polypropylene (PP).

Among these, PPS is particularly preferable as the thermoplastic resin because it has a high melting point (278°C) and a high glass transition temperature (92°C to 126°C). As PPS which is a thermoplastic resin suitable for the resin composition, it is possible to use any of an oxidatively crosslinked PPS that has been subjected to a heat treatment in the presence of oxygen to increase the melt viscosity, and a linear PPS in which lithium chloride, an organic acid salt, water, or other components is added in the polymerization line to increase the molecular weight while maintaining the linear shape. In addition, an oxidatively crosslinked PPS and a linear PPS can be mixed and used.

An isotropic pitch-based carbon fiber having optical isotropy is used as the carbon fiber among a pitch-based carbon fiber using a pitch. The isotropic pitch-based carbon fiber can be used to enhance the deformation resistance of the resin composition.

As specific examples of the shape of the isotropic pitch-based carbon fiber used in the resin composition, a single fiber has a fiber diameter of 1 to 20 µm, and the fibers have an average fiber length of 0.01 to 10 mm and an aspect ratio of about 1.5 to 1,300.

The silane coupling agent contained in the resin composition and is capable of controlling dropping of the melt resin composition during combustion.

The silane coupling agent contained in the resin composition may be, for example, at least one of an organosilicon compound and a siloxane compound. In addition, the silane coupling agent may be at least one of an amine-based silane coupling agent and an epoxy-based silane coupling agent. In a case where the amine-based silane coupling agent and the epoxy-based silane coupling agent are compared, an amine-based silane coupling agent having an amino terminal is more preferable.

Examples of the amine-based silane coupling agent include 3-aminopropyltriethoxysilane, 3-aminopropyltrimethoxysilane, N-2-(aminoethyl)-3-aminopropyltrimethoxysilane, N-2-(aminoethyl)-3-aminopropylmethyldimethoxysilane, N-phenyl-3-aminopropyltrimethoxysilane, and 3-triethoxysilyl-N-(1,3-dimethylbutylidene)propylamine.

In addition, examples of the epoxy-based silane coupling agents include 3-glycidoxypropyltriethoxysilane, 3-glycidoxypropylmethyldiethoxysilane, 3-glycidoxypropyltrimethoxysilane, 3-glycidoxypropylmethyldimethoxysilane, 2-(3,4-epoxycyclohexyl)ethyltrimethoxysilane.

Furthermore, as the silane coupling agent contained in the resin composition, various silane coupling agents such as acrylic (for example, 3-acryloxypropyltrimethoxysilane), vinyl-based, methacrylic, styryl-based, ureido-based, isocyanate-based, isocyanurate-based, and mercapto-based can be used.

In addition, as the silane coupling agent, in addition to the liquid silane coupling agent such as amine-based silane coupling agents, epoxy-based silane coupling agents, acrylic, vinyl-based, methacrylic, styryl-based, ureido-based, isocyanate-based, isocyanurate-based, and mercapto-based, which are described above, a solid silane coupling agent can also be used.

Examples of the solid silane coupling agent include X-12-1273ES (manufactured by Shin-Etsu Chemical Co., Ltd.).

When a liquid silane coupling agent and a solid silane coupling agent are compared, the liquid silane coupling agent is excellent in that the liquid silane coupling agent has a functional group and thus reactivity can be expected (a high effect can be expected in principle), and the solid silane coupling agent is excellent in terms of ease of handling.

In a case where the resin composition contains a glass fiber, any of filament fibers (long fiber: glass fiber) or staple fibers (short fiber: glass wool) can be used as the glass fiber to be employed.

The resin composition of the present embodiment may further include a fluororesin. Examples of the fluororesin include polytetrafluoroethylene (PTFE). As the PTFE, a powdered PTFE is preferably used. For example, a powdered PTFE having an average particle diameter of 10 to 30 µm and a specific surface area of 0.5 to 5 m²/g obtained by the BET method can be used. The fluororesin may include a fluororesin in a range of 1 part by mass or more and 50 parts by mass or less with respect to 100 parts by mass of the thermoplastic resin. Examples of the fluororesin include PTFE, PFA, FEP, and other fluororesins.

The resin composition may further contain carbon black as a colorant, a polyolefin wax, a stearyl alcohol, or the like as a mold release agent, and hydrotalcite, zinc carbonate, or the like as a metal die corrosion inhibitor.

Since the resin composition according to the present invention contains the thermoplastic resin, the carbon fiber, and the silane coupling agent, in which a content of the thermoplastic resin is within a range of 59 parts by mass or more and 88 parts by mass or less, a content of the carbon fiber is within a range of 1 part by mass or more and 18 parts by mass or less, and a content of the silane coupling agent is within a range of 0.3 parts by mass or more and 7 parts by mass or less, with respect to a total of 100 parts by mass of the resin composition, and the isotropic pitch-based carbon fiber is used as the carbon fibers, the resin composition is controllable for melt deformation and fluidization even though the resin composition is exposed to flames of about 1000°C, for example.

### (Method for Producing Resin Composition)

Next, an example of a method for producing the resin composition according to the present embodiment will be described.

In order to produce the resin composition of the present embodiment, first, the above-described thermoplastic resin is prepared. In a case where the total of the thermoplastic resin is 100 parts by mass, the amount of the thermoplastic resin corresponding to a range of 4 parts by mass or more and 77 parts by mass or less is set aside.

Next, the total of the silane coupling agent constituting the resin composition is gradually added dropwise to a part of thermoplastic resin set aside (silane coupling agent addition step). As a result, the part of the thermoplastic resin (premix) to which the silane coupling agent has been added is obtained.

Next, 23 parts by mass or more and 96 parts by mass or less of the remaining thermoplastic resin which has been set aside is added to the part of the thermoplastic resin to which the silane coupling agent is added, and the mixture is dry-blended to obtain an intermediate mixture in which the silane coupling agent and the total of the thermoplastic resin are mixed with each other (first mixing step).

Furthermore, a material other than the isotropic pitch-based carbon fiber with isotropy, which constitute the resin composition, is added to the intermediate mixture obtained in the first mixing step, and the mixture is further dry-blended (second mixing step). For example, while adding the total amount of the isotropic pitch-based carbon fiber constituting the resin composition by a twin-screw extruder through the feeder again, the kneading processing temperature is controlled to 270°C or higher and 300°C or lower, the screw rotation speed is controlled to 100 rpm or more and 300 rpm or less, and the granulation is performed at the kneading processing time of 30 minutes or more and 60 minutes or less, thereby a pellet-shaped resin composition can be formed.

Then, the resin molded body can be produced by molding the obtained resin composition by a known molding method such as extrusion molding using an extruder, press molding using a press machine, or injection molding using an injection molding machine.

As described above, in the method for producing a resin composition, the dry blending is important. That is, the procedures of firstly setting aside the part of the thermoplastic resin, adding the silane coupling agent dropwise thereto, and adding the remaining thermoplastic resin to blend these materials with each other are performed in this order, the silane coupling agent can be uniformly dispersed in the thermoplastic resin, the loss can be reduced, and the function of controlling the flow and deformation caused by the flames can be enhanced.

### (Resin Molded Body)

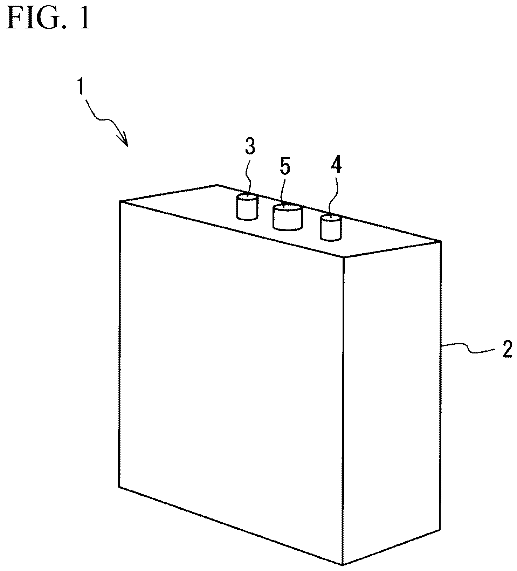

FIG. 1 is a perspective view of a lithium ion secondary battery cell to which a resin molded body according to an embodiment of the present invention is attached.

This lithium ion secondary battery cell 1 is a square battery cell, in which a positive electrode terminal 3 and a negative electrode terminal 4 are provided on an upper surface of an exterior can 2 that is a battery container, and a safety valve 5 is provided between the positive electrode terminal 3 and the negative electrode terminal 4.

The safety valve 5 operates in a case where an internal pressure is increased due to thermal runaway of the lithium ion secondary battery cell 1, and prevents the exterior can 2 from rupturing caused by the blowout of a high-temperature and high-pressure gas.

In a case where a thermal runaway of the lithium ion secondary battery cell 1 occurs, there is a possibility of igniting due to overheating, and when the high-temperature and high-pressure gas blown out from the safety valve 5 spreads over a wide area at a breath, it is difficult to prevent the spread of fire and burning.

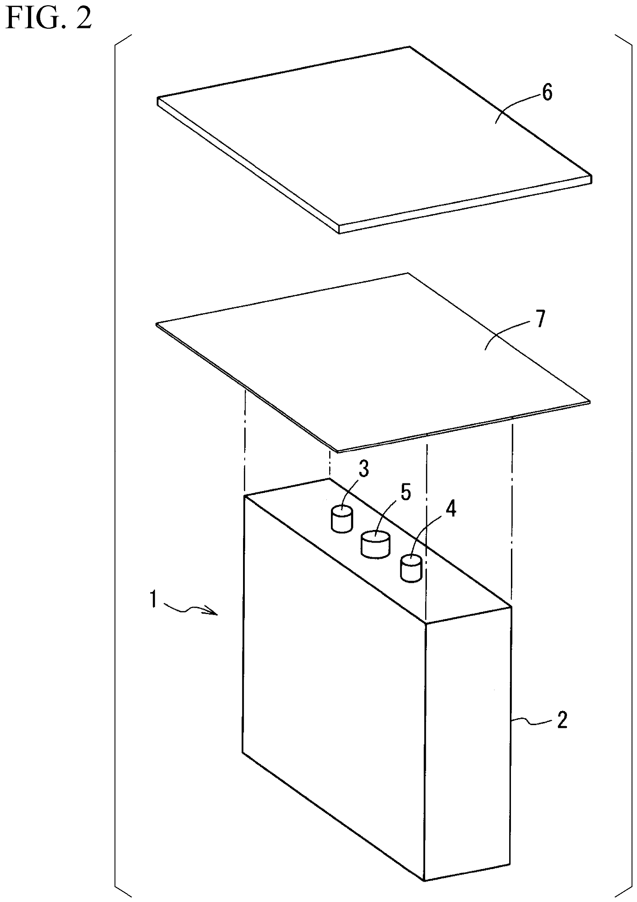

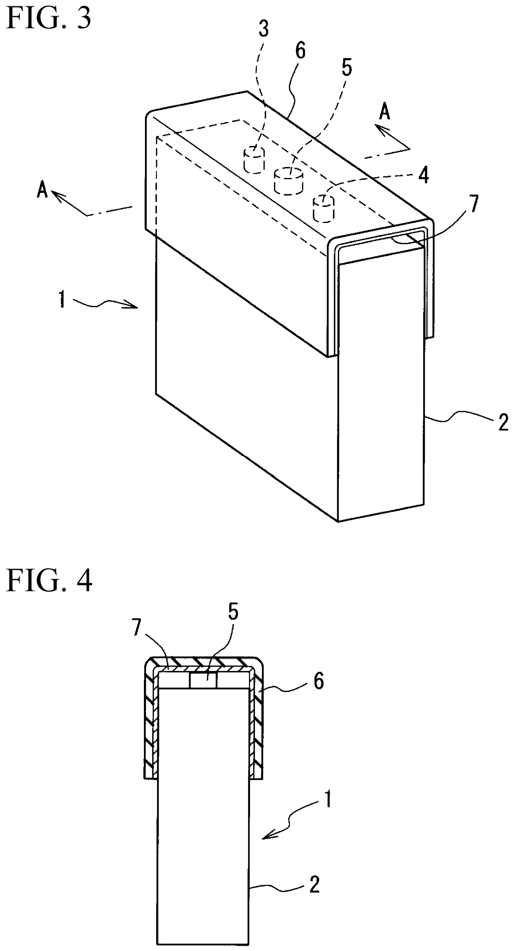

Therefore, in this embodiment, as shown in FIG. 2, FIG. 3, and FIG. 4, which is a sectional view taken along line A-A of FIG. 3, the sheet-shaped resin molded body 6 having flexibility is attached to the outer periphery of the lithium ion secondary battery cell 1 via the insulating sheet 7 to cover at least the safety valve 5. In addition, in a case where the resin molded body 6 is an insulating material or in a case where insulating properties are not required, the resin molded body 6 may be attached without the insulating sheet 7.

In this embodiment, both the insulating sheet 7 and the sheet-shaped resin molded body 6 have substantially the same size as a rectangular shape and are attached to cover not only the upper surface of the rectangular lithium ion secondary battery cell 1 including the safety valve 5 but also the upper part of the front surface and the back surface (left and right surfaces in FIG. 4).

The lead wire (not shown) connected to the positive electrode terminal 3 and the negative electrode terminal 4 of the lithium ion secondary battery cell 1 is drawn out using the side surface which is not covered with the insulating sheet 7 and the resin molded body 6.

The lithium ion secondary battery cell 1 to which the insulating sheet 7 and the sheet-shaped resin molded body 6 are attached is accommodated in an exterior case (not shown). Inside the exterior case, the resin molded body 6 that covers the upper part of the front surface and the back surface of the lithium ion secondary battery cell 1 is held by being pressed by the inner wall face of the exterior case.

**In** addition, the thickness of the part of the resin molded body 6 that covers the safety valve 5, that is, in this embodiment, the thickness of the resin molded body 6 is uniform, and the resin molded body 6 is sheet-shaped. Furthermore, the thickness of the sheet-shaped resin molded body 6 may be 0.5 mm or more and 10.0 mm or less, preferably 0.7 mm or more and 5 mm or less, and more preferably 1.0 mm or more and 2 mm or less.

In a case where this thickness is less than 0.5 mm, there is a concern that a through-hole is formed in the resin molded body 6 by the high-temperature and high-pressure gas blown out from the safety valve 5, and the high-temperature and high-pressure gas blow out from the through-hole, thereby spreading fire to and burning the member outside the lithium ion secondary battery cell 1 covered with the insulating sheet 7 and the sheet-shaped resin molded body 6. **In** addition, the through-hole serves as an air (oxygen) supply port, and there is a concern that the spread of the fire or burning of the lithium ion secondary battery cell 1 itself covered with the insulating sheet 7 and the sheet-shaped resin molded body 6 is increased.

In a case where the thickness of the sheet-shaped resin molded body 6 exceeds 10.0 mm, high-temperature and high-pressure gas can be blocked, that is, a through-hole is not formed, but the size of the resin molded body 6 becomes large, and the molding processing becomes complicated. In addition, it is difficult to accommodate the lithium ion secondary battery cell 1 in the existing exterior case for accommodating the lithium ion secondary battery cell 1.

As the hardness of the surface of the resin molded body 6, a value measured with a type D durometer using a sheet having a thickness of the resin molded body of 2 mm based on JIS K7215 is preferably 50 or more. In a case where the hardness of the surface is less than 50, there is a concern that the resin molded body 6 is damaged or a through-hole is formed due to the high-temperature and high-pressure gas (particularly, the influence of the pressure (blowout power)) blown out from the safety valve 5. The upper limit value of the hardness of the surface is 90 as an appropriate upper limit in the above standard, but may exceed 90 as long as it is within a moldable range. In a general measuring device, it is possible to measure up to about 100, and the hardness of the surface of the resin molded body 6 displayed by the measuring device may be 100 or less.

As described above, since the resin molded body 6 according to the present embodiment is formed to cover the safety valve 5 of the lithium ion secondary battery cell 1 by using the above-described resin composition, even in a case where the lithium ion secondary battery causes a thermal runaway, the through-hole is not formed in the resin molded body 6 due to the high-temperature and high-pressure gas blown out from the safety valve 5, and it is possible to suppress the spread of fire and the burning due to the blowout of the high-temperature and high-pressure gas.

### [Examples]

### (Evaluation for Deformation Resistance)

Hereinafter, as the evaluation for the deformation resistance (fire-resistance), samples (resin compositions) of the present invention Example 1 and Comparative Examples 1 to 3 were prepared, in which the type of carbon fibers contained in the resin composition is changed.

The common compositional ratio of the samples of the present invention Example 1 and Comparative Examples 1 to 3 is as follows.
· Thermoplastic resin (polyphenylene sulfide resin (PPS)): 70.4% by mass
· Silane coupling agent (3-aminopropyltriethoxysilane): 0.70% by mass · Carbon fibers: (see the next section) 7.00% by mass
· Glass fibers: 20.00% by mass
· Mold release agent: (PE520: manufactured by Clariant Chemicals Ltd., polyethylene wax) 0.40% by mass
· Corrosion inhibitor: (zinc carbonate (ZnCO₃)) 0.70% by mass
· Colorant: (BP880: manufactured by Cabot Japan K.K., carbon black) 0.80% by mass

The total thereof is 100% by mass.

[Present invention Example 1] As the carbon fibers, OGC360 (average fiber length: 360 µm, average fiber diameter: 11 µm) (DONACARBO, manufactured by Osaka Gas Chemicals Co., Ltd.), which is isotropic pitch-based carbon fibers, was used.

[Comparative Example 1] As the carbon fibers, MCC6000 (average fiber length of 6,000 µm, average fiber diameter of 11 µm) (DIALEAD, manufactured by Mitsubishi Chemical Corporation), which is an anisotropic pitch-based carbon fiber, was used.

[Comparative Example 2] As the carbon fibers, MCC200 (average fiber length of 179 µm, average fiber diameter of 11 µm) (DIALEAD, manufactured by Mitsubishi Chemical Corporation), which is an anisotropic pitch-based carbon fiber, was used. [Comparative Example 3] As the carbon fibers, MCC50 (average fiber length of 58 µm, average fiber diameter of 11 µm) (DIALEAD, manufactured by Mitsubishi Chemical Corporation), which is an anisotropic pitch-based carbon fiber, was used.

In the test method of the deformation resistance for the resin composition in each of the present invention Example 1 and Comparative Examples 1 to 3, a burner having an output of 5,580 W was fixed vertically downward, a resin composition (each sample) having a size of 100 mm × 120 mm × 2 mmt was prepared, and each sample was disposed horizontally with a floor at a position 170 mm from the nozzle of the burner. Then, the burner was ignited and a flame was applied to each sample.

Distance between sample and nozzle of burner: 170 mm
Local exhaust by draft
Thermal power: 5,580 W
Air temperature: 20°C
Humidity: 75% RH
Weather: fine

The test was terminated when a part of the sample melted and dropped onto the floor surface.

Such a test method was carried out twice for each sample.

Table 1 shows the time (seconds) required for 10 mm deformation for each sample.

**[Table 1]**

| | Optical characteristics of carbon fibers | Average length of carbon fibers (µm) | Average diameter of carbon fibers (µm) | Defomation time of 10 mm (sec) |
|---|---|---|---|---|
| Example 1 | Isotropic | 360 | 13 | 77.53 |
| Comparative Example 1 | Anisotropic | 6000 | 11 | 43.20 |
| Comparative Example 2 | Anisotropic | 179 | 11 | 51.38 |
| Comparative Example 3 | Anisotropic | 58 | 11 | 46.43 |

According to the evaluation for the deformation resistance shown in FIG. 5 and Table 1, it was confirmed that, by using the isotropic pitch-based carbon fibers as the carbon fibers contained in the resin composition, it is possible to significantly delay deformation caused by heat as compared with the conventional example using the anisotropic pitch-based carbon fibers. Therefore, according to the present embodiment, it is possible to achieve the resin composition that enables the controlling of melting, deformation, and fluidization caused by the blowout of a high-temperature gas or a flame.

In the above-described evaluation for the deformation resistance, each sample contains a metal die corrosion inhibitor, a mold release agent, and a colorant, but the resin composition for forming the resin molded body according to the present invention does not necessarily contain these metal die corrosion inhibitor, mold release agent, and colorant. A resin molded product having excellent deformation resistance can be obtained even though these corrosion inhibitor, the mold release agent, and the colorant are not contained.

In addition, the content of each of the corrosion inhibitor, the mold release agent, and the colorant in the above-described evaluation for deformation resistance is an example, and the content of each of the corrosion inhibitor, the mold release agent, and the colorant can be increased or decreased to any content as necessary, that is, the contents are not limited thereto.

### [Industrial Applicability]

It is possible to provide the resin composition that enables the control of melting, deformation, and fluidization caused by the blowout of a high-temperature gas or a flame, the resin molded body formed by using the resin composition, and the method for producing the resin composition.

### REFERENCE SIGNS LIST

1: Lithium ion secondary battery cell
2: Exterior can
3: Positive electrode terminal
4: Negative electrode terminal
5: Safety valve
6: Resin molded body
7: Insulating sheet

## Claims

1. A resin composition comprising:
a thermoplastic resin;
a carbon fiber; and
a silane coupling agent,
wherein a content of the thermoplastic resin is within a range of 59 parts by mass or more and 88 parts by mass or less, a content of the carbon fiber is within a range of 1 part by mass or more and 18 parts by mass or less, and a content of the silane coupling agent is within a range of 0.3 parts by mass or more and 7 parts by mass or less, with respect to a total of 100 parts by mass of the resin composition, and
the carbon fiber is an isotropic pitch-based carbon fiber.

2. The resin composition according to Claim 1,
wherein the thermoplastic resin includes at least one of polyphenylene sulfide, polyamide, polybutylene terephthalate, a modified polyphenylene ether, or polycarbonate.

3. The resin composition according to Claim 1 or 2,
wherein the silane coupling agent is at least one of an organosilicon compound or a siloxane compound.

4. The resin composition according to Claim 3,
wherein the organosilicon compound is at least one of an amine-based silane coupling agent or an epoxy-based silane coupling agent.

5. The resin composition according to any one of Claims 1 to 4, further comprising a glass fiber,
wherein a content of the glass fiber is within a range of 3 parts by mass or more and 35 parts by mass or less with respect to 100 parts by mass of the thermoplastic resin.

6. A resin molded body formed by molding the resin composition according to any one of Claims 1 to 5.

7. The resin molded body according to Claim 6,
wherein the resin molded body is attached to an outer periphery of one or more lithium ion secondary battery cells having a safety valve or an exhaust hole to cover at least the safety valve or the exhaust hole.

8. A method for producing the resin composition according to any one of Claims 1 to 4, the method comprising:
a silane coupling agent addition step of adding a total amount of the silane coupling agent dropwise to a part of a thermoplastic resin fractionated within a range of 4 parts by mass or more and 77 parts by mass or less from 100 parts by mass of the thermoplastic resin to obtain a part of the thermoplastic resin to which the silane coupling agent is added;
a first mixing step of adding a remainder of the thermoplastic resin within a range of 23 parts by mass or more and 96 parts by mass or less to the part of the thermoplastic resin to which the silane coupling agent is added and mixing the remainder and the part of the thermoplastic resin to which the silane coupling agent is added to obtain an intermediate mixture in which the silane coupling agent and a total amount of the thermoplastic resin are mixed with each other; and
a second mixing step of adding a total amount of the carbon fiber to the intermediate mixture and further mixing the carbon fiber and the intermediate mixture to obtain the resin composition.
